# FASCICULE DE BREVET EUROPEEN

(11) **EP 3 861 419 B1**
(45) Date de publication et mention de la délivrance du brevet: **15.11.2023**
(21) Numéro de dépôt: 19802236.0
(22) Date de dépôt: 26.09.2019
(51) Int. Cl.: G05D 23/19, F01P 7/00, F01P 1/00, F01P 7/16

(54) **VANNE THERMOSTATIQUE ET VEHICULE COMPRENANT CETTE VANNE**
THERMOSTATISCHES VENTIL UND FAHRZEUG MIT DIESEM VENTIL
THERMOSTATIC VALVE AND VEHICLE COMPRISING SAID VALVE

(30) Priorité: 05.10.2018 FR 1859250
(43) Date de publication de la demande: 11.08.2021
(73) Titulaire: NOVARES France, 78140 Vélizy-Villacoublay (FR)
(72) Inventeur: QUEVALLIER, Jean-Claude, 59810 LESQUIN (FR)
(74) Mandataire: Germain Maureau
(86) Numéro de dépôt international: PCT/FR2019/052287
(87) Numéro de publication internationale: WO 2020/070414

(56) Documents cités:
- EP-A1- 0 235 472
- EP-A1- 1 132 590
- FR-A1- 2 853 710
- US-A- 4 875 437

## Description

La présente invention concerne une vanne thermostatique destinée à contrôler un débit de fluide, notamment le débit d'un fluide de refroidissement pour moteur de véhicule, et un véhicule équipé de cette vanne.

Il est connu de réguler la température d'un moteur de véhicule à l'aide d'un boîtier de sortie d'eau ou d'un collecteur d'entrée d'eau équipés d'une vanne thermostatique. La vanne thermostatique commande le débit du fluide de refroidissement du moteur vers un radiateur.

Les vannes thermostatiques comprennent traditionnellement un boîtier présentant une entrée de fluide, une première sortie de fluide connectée au radiateur, une deuxième sortie de fluide connectée à un circuit secondaire dit de « by-pass », un clapet destiné à obturer la première sortie de fluide, et un actionneur thermostatique, classiquement une capsule à cire munie d'une tige d'actionnement permettant de déplacer le clapet afin d'ouvrir un passage vers le radiateur. Le changement d'état de la cire d'un état solide à un état liquide, qui provoque une augmentation de volume déplaçant le clapet, dépend de la température du fluide circulant dans le boîtier. Au-delà d'une température d'ouverture prédéterminée, classiquement comprise entre 80°C et 90°C, la cire change d'état, provoquant l'ouverture du clapet.

Afin d'optimiser le rendement des moteurs modernes et répondre aux exigences des nouvelles normes de rejets polluants et de CO₂, la régulation thermique des moteurs est avantageusement repoussée entre 100°C et 110°C en utilisation peu sévère (faible et moyenne charge). Toutefois pour certains cas d'utilisations (forte charge et/ou vitesse élevée), il est nécessaire de baisser la température du fluide de refroidissement afin d'éviter une surchauffe préjudiciable du moteur.

Pour obvier à ce risque, il est connu d'équiper la vanne thermostatique d'un élément chauffant s'étendant à l'intérieur de la capsule afin de chauffer la cire et anticiper l'ouverture du clapet. L'élément chauffant se présente généralement sous la forme d'une résistance électrique qui chauffe directement la cire. Cette résistance électrique peut être intégrée dans la tige d'actionnement de l'actionneur thermostatique. Une vanne thermostatique équipée de cet élément chauffant offre classiquement deux modes de fonctionnement : un mode de fonctionnement non piloté, dans lequel l'ouverture du clapet est commandée uniquement par la température du fluide circulant dans lequel baigne la capsule de cire, et un mode de fonctionnement piloté, dans lequel l'élément chauffant apporte une énergie qui s'ajoute à l'énergie du fluide circulant, si bien que la température d'ouverture du clapet est anticipée d'environ 20°C par rapport à la température d'ouverture en fonctionnement non piloté. Ainsi, dans des conditions de fortes sollicitations du moteur par exemple, le pilotage électrique de la vanne thermostatique permet d'anticiper l'ouverture de la circulation vers le radiateur, améliorant l'évacuation de la chaleur.

L'élément chauffant est classiquement constitué d'une résistance électrique contenue dans une tige métallique qui fait office de tige de thermostat. Ce type d'élément chauffant est ainsi connu des documents US20080290085, US20100230399 et US20150351157.

Un thermostat piloté électriquement est connu du document EP2630351 qui montre un élément chauffant de type PTC (de l'anglais « Positive Température Coefficient », pour Coefficient de Température Positif) plongé dans la cire de la capsule.

Le document DE102009056041 montre un élément de type PTC utilisé comme sonde de température active pour contrôler la puissance de chauffe d'une résistance chauffante agencée dans la capsule de cire.

Un autre exemple de thermostat piloté électriquement est connu du document RU2270923 qui montre une capsule à charge expansible montée à l'extérieur du boitier et équipée d'une résistance électrique chauffante, en vue de déplacer un clapet ouvrant vers un circuit de radiateur. Cependant, la capsule est isolée du fluide circulant par le clapet, si bien que ce thermostat ne peut pas fonctionner en mode non piloté, sauf à prévoir un capteur de température en amont ou un deuxième thermostat baignant dans le fluide circulant.

Le document US4875437, le document EP0235472 et le document EP1132590 montrent chacun une vanne thermostatique ayant un element thermostatique principal et un élément thermostatique secondaire.Un inconvénient des vannes thermostatiques pilotées électriquement est l'étanchéité au niveau des conducteurs électriques connectés à l'élément chauffant. Il existe un risque que le fluide circulant remonte via ces conducteurs électriques jusqu'à un calculateur moteur, au risque d'engendrer une panne de l'équipement électronique. Le document FR2853710A1 montre également une vanne thermostatique.

Un autre inconvénient réside dans le fait que les éléments chauffants intégrés dans la capsule de cire imposent l'utilisation d'une cire pure, dépourvue de charges conductrices. En effet, ces charges conductrices, métalliques, risqueraient de s'agglomérer sur la tige d'actionnement intégrant l'élément chauffant, via par exemple un phénomène de microsoudures, rendant la tige d'actionnement abrasive pour le joint d'étanchéité dynamique assurant l'étanchéité entre la capsule et le fluide circulant.

En outre, le pilotage électrique de la vanne thermostatique et l'ouverture du clapet peuvent être requis pour d'autres finalités que le refroidissement du moteur, par exemple pour réguler la température d'une boite de vitesse automatique ou pour une gestion de la température liée aux rejets polluants. Dans ces cas particuliers, il peut être nécessaire d'ouvrir le clapet alors que le fluide en circulation dans le boîtier est encore froid. La cire est alors réchauffée électriquement par l'élément chauffant, mais simultanément refroidie par le fluide dans lequel la capsule de cire baigne. Lorsque la température du fluide est en-dessous d'un seuil prédéterminé, l'élément chauffant n'est pas en capacité d'ouvrir à lui seul le clapet. Or, des applications telles que le refroidissement d'une boîte de vitesse automatique peuvent nécessiter l'ouverture du clapet alors que la température du fluide est relativement basse. Il existe donc un besoin de pouvoir piloter une vanne thermostatique aux températures les plus basses possibles du fluide circulant.

Aussi, l'invention vise à pallier tout ou partie de ces inconvénients, en proposant une vanne thermostatique pilotée électriquement et offrant une efficacité et une étanchéité améliorées.

A cet effet, la présente invention a pour objet une vanne thermostatique comprenant un boîtier, le boîtier comprenant au moins une entrée de fluide, au moins une première sortie de fluide et au moins une deuxième sortie de fluide, un clapet principal mobile par rapport au boîtier entre une position fermée dans laquelle le clapet principal ferme la première sortie de fluide et une position ouverte dans laquelle le clapet principal ouvre la première sortie de fluide, un actionneur thermostatique, l'actionneur thermostatique comprenant une tige d'actionnement connectée au clapet principal et une capsule contenant une matière thermodilatable, et un élément chauffant destiné à chauffer la matière thermodilatable, caractérisée en ce que la capsule de l'actionneur thermostatique présente une portion interne qui s'étend à l'intérieur du boîtier de manière à baigner dans le fluide circulant entre l'entrée et la deuxième sortie du boîtier, et une portion externe qui s'étend en-dehors du boîtier, en ce que l'élément chauffant est agencé hors du boîtier et hors de la capsule pour chauffer la portion externe de cette capsule.

Ainsi, la vanne thermostatique selon l'invention offre une étanchéité et une efficacité améliorée. En effet, le positionnement de l'élément chauffant hors du boîtier et de la capsule, c'est-à-dire à l'abri à la fois du fluide et de la matière thermodilatable, empêche tout risque de défaut d'étanchéité. De plus, comme l'élément chauffant ne baigne plus dans la matière thermodilatable, l'utilisation de cire pure n'est plus requise, offrant ainsi la possibilité de modifier les propriétés de la cire afin d'améliorer l'efficacité de la vanne thermostatique. Aussi, comme la portion externe de la capsule n'est pas en contact avec le fluide circulant, celle-ci est moins sensible à la température du fluide ; quand le fluide est relativement froid, il devient donc cependant possible de piloter électriquement la vanne selon l'invention grâce à l'élément chauffant agissant sur la portion externe de la capsule. Toutefois, le fait que la capsule conserve une portion interne immergée dans le débit de fluide permet toujours une utilisation efficace de la vanne dans un mode de fonctionnement non piloté.

Selon un mode de réalisation préféré, l'élément chauffant est un élément PTC. Les éléments PTC (de l'angais « Positive Température Coefficient », pour Coefficient de Température Positif) ont l'avantage d'offrir une autorégulation de la puissance en fonction de la température.

Selon un mode de réalisation préféré, la vanne thermostatique comprend un capuchon de protection, thermiquement et électriquement isolant, logeant l'élément chauffant et la portion externe de la capsule. Ce capuchon assure ainsi l'isolation thermique de l'élément chauffant et de la portion externe de la capsule par rapport à l'air ambiant.

Le capuchon de protection peut être rapporté et fixé au boîtier, notamment de manière à plaquer l'élément chauffant contre la capsule. La vanne peut aussi comprendre un connecteur électrique d'alimentation relié à l'élément chauffant, le connecteur électrique d'alimentation étant déporté ou intégré au capuchon de protection. Le capuchon assure l'étanchéité de l'élément chauffant et du câblage électrique reliant l'élément chauffant au connecteur. Ce capuchon sera donc avantageusement réalisée en matière plastique, par exemple du type Polyamide (PA) 6 ou 6-6 ou encore du type Polyphtalamide (PPA), qui présente toutes les propriétés requises, en particulier d'isolation électrique et ayant une bonne tenue à la chaleur.

Selon un mode de réalisation préféré, la vanne thermostatique comprend des moyens de rappel configurés pour maintenir l'élément chauffant au contact de la capsule. Ces moyens de rappel permettent de maintenir en pression l'empilage capsule / élément PTC lorsque le clapet principal est fermé, afin de garantir une bonne continuité thermique et électrique.

Selon un mode de réalisation préféré, la matière thermodilatable est une cire incluant une charge thermiquement conductrice. Ainsi, la réactivité de la vanne thermostatique est améliorée.

Selon un mode de réalisation préféré, la capsule est montée fixe par rapport au boîtier. Cela permet une gestion plus simple de l'étanchéité. La vanne thermostatique comprend ainsi avantageusement des moyens d'étanchéité statique.

Selon un mode de réalisation préféré, la tige d'actionnement est configurée pour s'étendre jusque dans la portion externe de la capsule. Ainsi, cela améliore la sensibilité de la tige d'actionnement au changement de volume de la cire dans la portion externe de la capsule, c'est-à-dire en mode de fonctionnement piloté.

Selon un mode de réalisation préféré, la vanne thermostatique comprend des moyens de rappel du clapet principal en position fermée, montés en opposition à l'actionneur thermostatique.

Selon un mode de réalisation préféré, la vanne thermostatique comprend un clapet secondaire configuré pour obturer ou ouvrir la deuxième sortie de fluide quand le clapet principal est respectivement ouvert ou fermé.

Selon un autre aspect, l'invention concerne un véhicule automobile comprenant une vanne thermostatique ayant les caractéristiques précitées.

D'autres caractéristiques et avantages de la présente invention ressortiront clairement de la description détaillée ci-après d'un mode de réalisation, donné à titre d'exemple non limitatif, en référence aux dessins annexés dans lesquels :
- Les figures 1A et 1B sont des vues schématiques d'une vanne selon un mode de réalisation de l'invention, clapet principal respectivement en position fermée et ouverte,
- La figure 2A est une vue en coupe et en perspective d'une vanne selon un mode de réalisation de l'invention,
- Les figures 2B et 2C sont des vues en coupe d'une vanne selon un mode de réalisation de l'invention, clapet principal respectivement en position fermée et ouverte,
- La figure 2D est une vue en coupe et en perspective d'une partie vanne selon un mode de réalisation de l'invention,
- La figure 2E est une vue éclatée et en coupe de la partie de vanne illustrée à la figure 2D,
- La figure 3A est une vue en coupe et en perspective d'une vanne selon un mode de réalisation de l'invention,
- Les figures 3B et 3C sont des vues en coupe d'une vanne selon un mode de réalisation de l'invention, clapet principal respectivement en position fermée et ouverte,
- La figure 3D est une vue en coupe et en perspective d'une partie vanne selon un mode de réalisation de l'invention,
- La figure 3E est une vue éclatée et en coupe de la partie de vanne illustrée à la figure 3D.

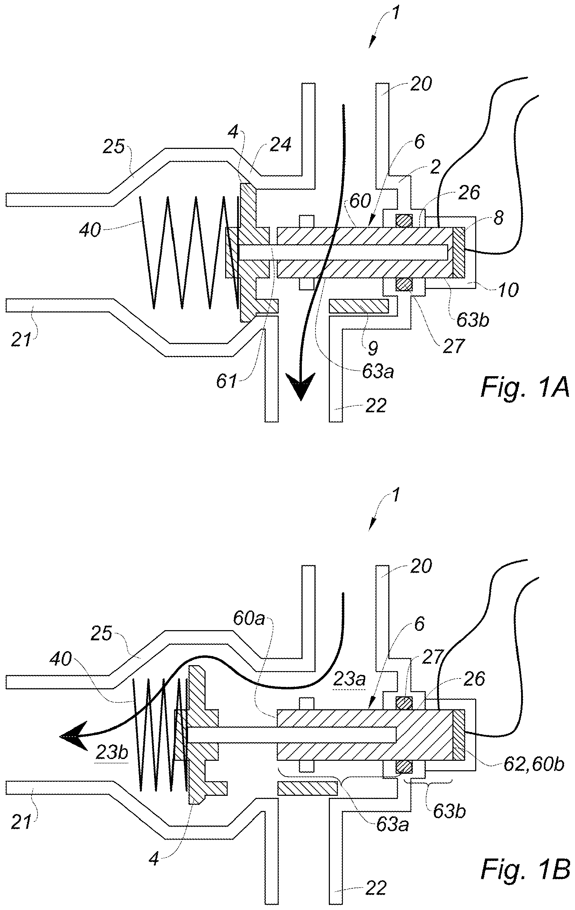

Les figures 1A et 1B montrent une vanne 1 thermostatique selon un mode de réalisation de l'invention. La vanne 1 thermostatique sert à la régulation du débit d'un fluide, typiquement le fluide de refroidissement d'un organe, par exemple un moteur, de véhicule automobile. Ainsi, la vanne 1 thermostatique peut équiper un boîtier de sortie d'eau ou un boîtier d'entrée d'eau. Elle peut être pilotée électriquement.

La vanne 1 thermostatique comprend un boîtier 2, un clapet 4 principal, un actionneur 6 thermostatique à capsule 60 de matière thermodilatable pour ouvrir le clapet 4 principal en fonction de la température du fluide circulant dans le boîtier 2 (mode de fonctionnement non piloté de la vanne 1 thermostatique), et un élément 8 chauffant pour chauffer la matière thermodilatable et conséquemment anticiper l'ouverture du clapet 4 principal (mode de fonctionnement piloté de la vanne 1 thermostatique).

Le boîtier 2 comprend une entrée 20 de fluide pour recevoir un fluide de refroidissement en provenance du moteur, une première sortie 21 de fluide qui est destinée à être reliée à un radiateur et une deuxième sortie 22 de fluide qui est destinée à être reliée à un circuit secondaire aussi appelé circuit de « by-pass ». L'intérieur du boîtier 2 est creux et délimite un volume intérieur de circulation de fluide, où débouchent l'entrée 20 de fluide ainsi que les première et deuxième sorties 21, 22 de fluide. Comme indiqué sur la figure 1B, le clapet 4 principal divise le volume intérieur de circulation de fluide en une partie 23a amont et une partie 23b aval.

Le clapet 4 principal, par exemple en forme de disque, est destiné à obturer ou ouvrir la première sortie 21 de fluide menant au radiateur. A cet effet, le clapet 4 est mobile par rapport au boîtier 2 entre une position fermée (figures 1A, 2B, 3B) dans laquelle le clapet 4 principal, en appui contre un siège 24 du boîtier 2, empêche le fluide de circuler jusqu'à la première sortie 21, et une position ouverte (figures 1B, 2C, 3C) dans laquelle le clapet 4 principal, à distance du siège 24, permet au fluide de circuler depuis l'entrée 20 jusqu'à la première sortie 21. Le clapet 4 principal est mobile en translation entre la position d'ouverture et la position de fermeture.

Le clapet 4 principal est avantageusement déporté par rapport à l'entrée 20 de fluide : il ne s'étend pas au droit de celle-ci. De plus, pour limiter l'impact de la pression sur la température d'ouverture, le clapet 4 principal s'étend de préférence parallèlement à la normale à l'ouverture d'entrée 20 de fluide, et non orthogonalement à celle-ci. On notera également que le déplacement du clapet 4 principal de la position fermée à la position ouverte s'effectue vers l'aval, c'est-à-dire dans la direction d'écoulement du fluide, et non dans une direction contraire à l'écoulement du fluide vers la première sortie 21.

Pour ramener le clapet 4 principal en position fermée, la vanne 1 thermostatique est équipée de moyens de rappel, comme un ressort 40. Le ressort 40 présente une extrémité prenant appui sur un épaulement 25 du boîtier et une autre extrémité prenant appui sur le clapet 4 principal. On notera que ces moyens de rappel sont avantageusement agencés à l'opposé de l'actionneur 6 thermostatique et notamment de sa capsule 60 à matière thermodilatable, c'est-à-dire de l'autre côté du clapet 4 principal, dans la partie 23b aval du boîtier 2.

L'actionneur 6 thermostatique comprend une capsule 60 à matière thermodilatable, par exemple une capsule à cire, et une tige 61 d'actionnement coopérant avec le clapet 4 principal pour déplacer celui-ci vers la position ouverte lors de l'augmentation de volume de la matière thermodilatable. L'actionneur 6 thermostatique est agencé perpendiculairement au clapet 8 principal, et de manière sensiblement orthogonale à l'entrée 20 et à la deuxième sortie 22 de fluide.

La tige 61 d'actionnement est mobile par rapport à la capsule 60 entre une position déployée (figures 1B, 2C, 3C), dans laquelle la tige 61 d'actionnement maintient le clapet 4 principal en position ouverte, et une position rétractée (figures 1A, 2B, 3B) dans laquelle la tige 61 d'actionnement permet la fermeture du clapet 4 principal. La tige 61 d'actionnement est mobile en translation entre ses positions déployée et rétractée. C'est l'augmentation de volume de la matière thermodilatable qui provoque le déplacement de la tige 61 d'actionnement de la position rétractée à la position déployée, en opposition avec les moyens de rappel. Le déplacement inverse de la tige 61 d'actionnement est assuré par l'action des moyens de rappel du clapet 4 principal, lorsque la matière contenue dans la capsule diminue de volume.

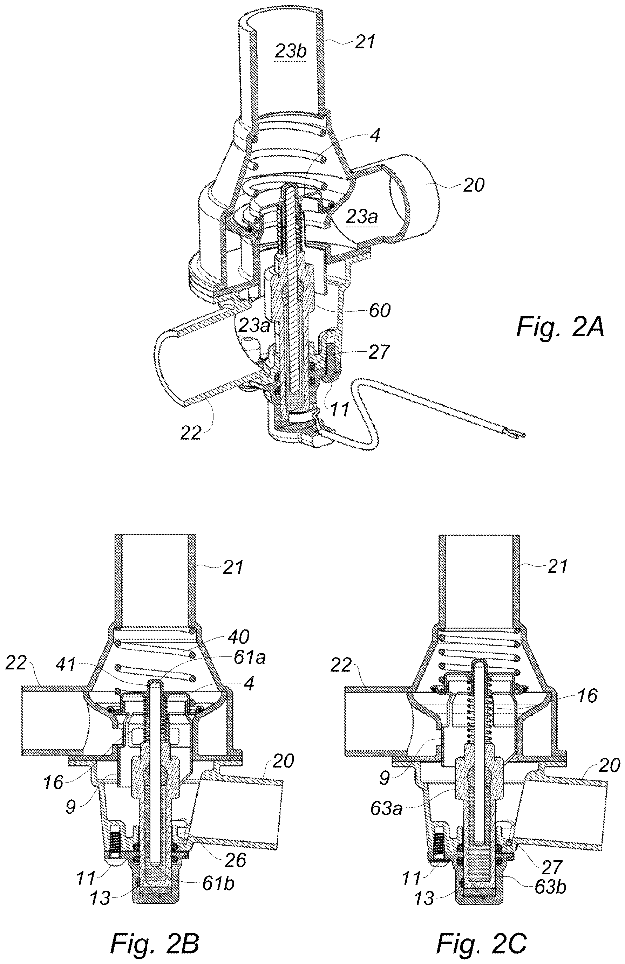

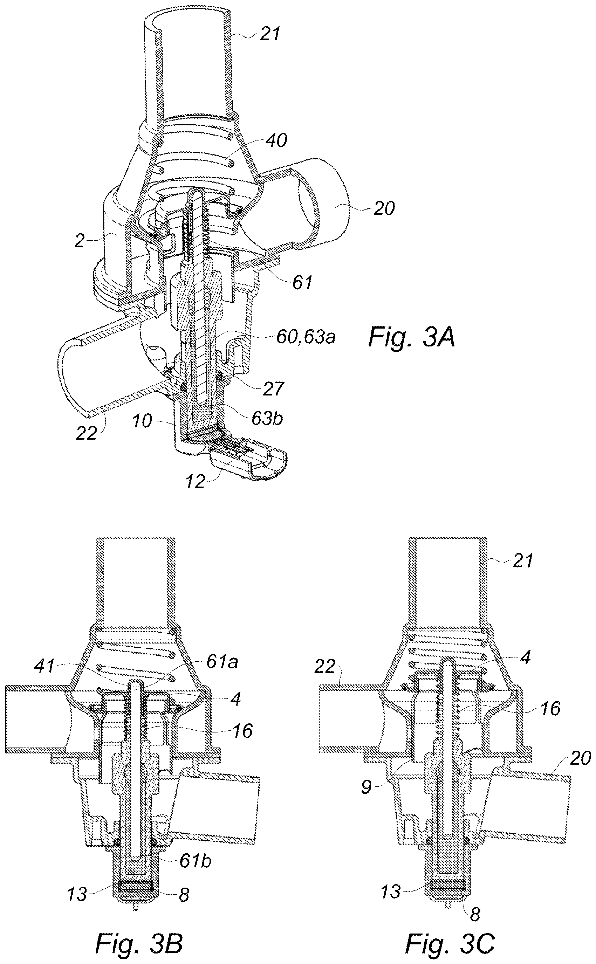

La tige 61 d'actionnement est en appui contre le clapet 4 principal, à l'opposé du ressort 40. Comme représenté par exemple sur les figures 2B et 3B, elle présente avantageusement une première extrémité 61a emboîtée avec le clapet 4 principal, par exemple logée dans un manchon 41 du clapet 4 principal. Une deuxième extrémité 61b opposée à la première extrémité 61a est située dans la capsule 60.

La capsule 60 contient une matière thermodilatable, comme de la cire, destinée à augmenter de volume sous l'effet de la température, et plus particulièrement à partir d'une température seuil dite « d'ouverture » du fluide circulant dans le boîtier, par exemple de l'ordre de 100°C à 110°C. La capsule 60 peut être cylindrique. Elle présente une extrémité 60a immergée et une extrémité 60b non immergée. L'extrémité 60a immergée délimite une ouverture par laquelle la tige 61 d'actionnement s'étend hors de la capsule 60. L'extrémité 60b non immergée présente un fond 62 qui s'étend hors du boîtier 2 et contre lequel peut être agencé un élément 8 chauffant, comme cela sera décrit plus en détail ci-après. Comme l'élément 8 chauffant est hors de la capsule 60, la cire contenue dans la capsule 60 peut avantageusement comprendre une charge thermiquement conductrice permettant d'améliorer la réactivité de la cire. Cette charge, par exemple métallique, peut être de la poudre de cuivre.

La capsule 60 est montée fixe par rapport au boîtier 2. Elle traverse en outre le boîtier 2. De ce fait, le boîtier 2 présente une ouverture 26 de montage en travers de laquelle s'étend la capsule 60. Ainsi, la capsule 60 se divise en deux parties : une portion interne 63a, qui est à l'intérieur du boîtier 2, et une portion externe 63b, qui est à l'extérieur du boîtier 2. La portion interne 63a est agencée pour baigner dans le fluide circulant à l'intérieur du boîtier 2 ; elle s'étend précisément dans la partie amont 23a du volume intérieur de circulation de fluide délimité par le boîtier 2. La portion externe 63b en revanche est en-dehors du volume de circulation de fluide délimité par le boîtier 2 ; elle baigne dans l'air ambiant autour du boîtier 2. Des moyens d'étanchéité, de préférence statique, comme un joint torique 27, peuvent être placés dans l'ouverture 26 de montage afin de réaliser l'étanchéité entre la capsule 60 et le boîtier 2. Cette étanchéité marque la séparation entre la portion 63a interne et la portion 63b externe de la capsule 60.

Il est nécessaire que la capsule 60 baigne suffisamment dans le flux de fluide afin que la vanne 1 thermostatique puisse fonctionner en mode de fonctionnement non piloté. A cet effet, la portion interne 63a s'étend sur au moins un tiers de la longueur totale de la capsule 60, mais elle est de préférence plus longue que la portion 63b externe. Selon l'exemple avantageux de réalisation illustré sur les figures, la longueur de la portion interne 63a est de l'ordre de deux tiers à trois quarts environ de la longueur totale de la capsule 60.

En position rétractée, la tige 61 d'actionnement s'étend à l'intérieur de la portion externe 63b, afin d'améliorer la réactivité en mode piloté de l'actionneur 6 thermostatique. Ainsi, dans la position rétractée, sa deuxième extrémité 61b est située dans la portion externe 63b.

L'élément 8 électrique chauffant est destiné à chauffer la matière thermodilatable de la capsule 60. Cet élément 8 chauffant est une résistance électrique, par exemple un élément résistif bobiné, ou une thermistance, comme par exemple un élément PTC. Cet élément PTC peut être obtenu à partir de poudre de céramique et peut se présenter sous la forme d'une pastille.

L'élément 8 chauffant est agencé hors du boîtier 2, donc hors du volume de circulation du fluide délimité par le boîtier 2, de l'autre côté de l'étanchéité entre la capsule 60 et le boîtier 2, mais aussi hors de la capsule 60, si bien que l'élément 8 chauffant n'est pas plongé dans la matière thermodilatable. On remarquera que l'élément 8 chauffant est agencé préférentiellement au contact de la capsule 60, et plus précisément contre sa portion externe 63b. Selon un mode de réalisation préféré, l'élément 8 chauffant est positionné contre le fond 62 de la capsule 60. La vanne 1 thermostatique peut comprendre une pâte thermiquement et/ou électriquement conductrice, de type pâte chargée de particules d'argent, à l'interface entre l'élément 8 chauffant et la portion externe 63b de la capsule 60, afin de garantir une bonne continuité thermique et/ou électrique. Cette pâte conductrice thermique peut être à base de silicone ou de graisse, chargée d'oxydes métalliques (par exemple oxydes de zinc, d'aluminium, etc.), et possiblement chargée de poudre ou de nano particules d'argent ou de carbone pour qu'elle soit conductrice électriquement. Cette pâte peut être adhésive ou non. Cette pâte permet de combler les irrégularités même microscopiques entre les deux surfaces en contact, la pâte conductrice chassant l'air qui est très mauvais conducteur. Il est alternativement possible d'utiliser un patch autocollant thermiquement et/ou électriquement conducteur. Par ailleurs, l'élément 8 chauffant peut comprendre un revêtement thermiquement et/ou électriquement conducteur.

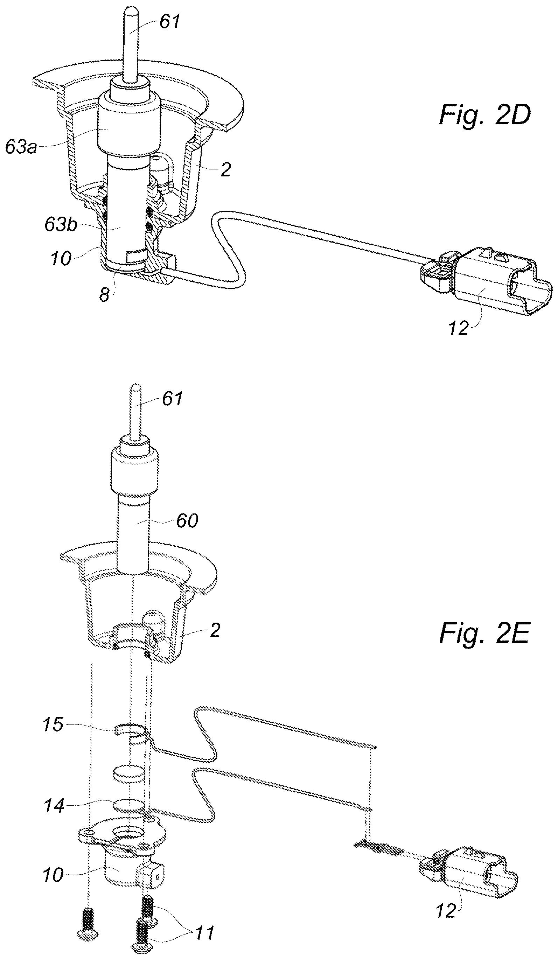

Pour protéger l'élément 8 chauffant ainsi que la portion externe 63b de la capsule 60, il est prévu un capuchon 10 de protection qui est avantageusement rapporté au boîtier 2. Ce capuchon 10 de protection délimite par exemple un logement au fond duquel est logé l'élément 8 chauffant et pouvant également recevoir la portion 63b externe. De préférence, conformément au mode de réalisation illustré sur les figures 3A à 3E, le capuchon 10 de protection est soudé au boîtier, améliorant ainsi l'étanchéité. Alternativement ou de manière complémentaire, le capuchon 10 de protection peut être fixé au boîtier 2 par l'intermédiaire d'organes de fixation tels que des vis 11, comme cela est illustré sur les figures 2B, 2C et 2E, ce qui permet de plaquer efficacement l'élément 8 chauffant contre la capsule 60 afin de garantir une continuité électrique et/ou thermique fiable entre l'élément 8 chauffant et la capsule 60. Dans tous les cas, le capuchon 10 de protection comprend avantageusement une paroi 13 d'appui destinée à venir en appui contre l'élément 8 chauffant pour plaquer celui-ci contre la capsule 60.

La vanne 1 thermostatique comprend également un connecteur 12 électrique pour connecter l'élément 8 chauffant à une alimentation. Le connecteur 12 électrique peut être à distance du capuchon 10 de protection (figures 2A à 2E) ou intégré au capuchon 10 de protection, par exemple venu de moulage avec celui-ci (figure 3A à 3E). Le capuchon 10 de protection comprend les contacts électriques ; il est configuré pour permettre le passage des fils de pilotage de l'élément 8 chauffant jusqu'au connecteur 12.

Afin d'optimiser le transfert thermique de l'élément 8 chauffant vers la capsule 60 à cire, il est avantageux de mettre en contact direct l'élément 8 chauffant sur le fond de la capsule 60. Dans ce cas, comme illustré sur les figures 2A, 2D et 2E, une première électrode 14 peut être placée au fond du capuchon 10 de protection, par exemple contre sa paroi 13 d'appui ou éventuellement soudée à la pastille PTC, puis coté capsule 60, par la capsule 60 elle-même reliée à la masse par une deuxième électrode 15 intercalée entre la capsule 60 et l'élement 8 chauffant, éventuellement clipsée, ou soudée à l'élement 8 chauffant. Afin d'assurer une bonne continuité électrique entre l'élément 8 chauffant et la capsule 60, il est avantageux d'utiliser une pâte à conductivité thermique et électrique telle qu'une pâte précédemment décrite, chargée par exemple de particules d'argent.

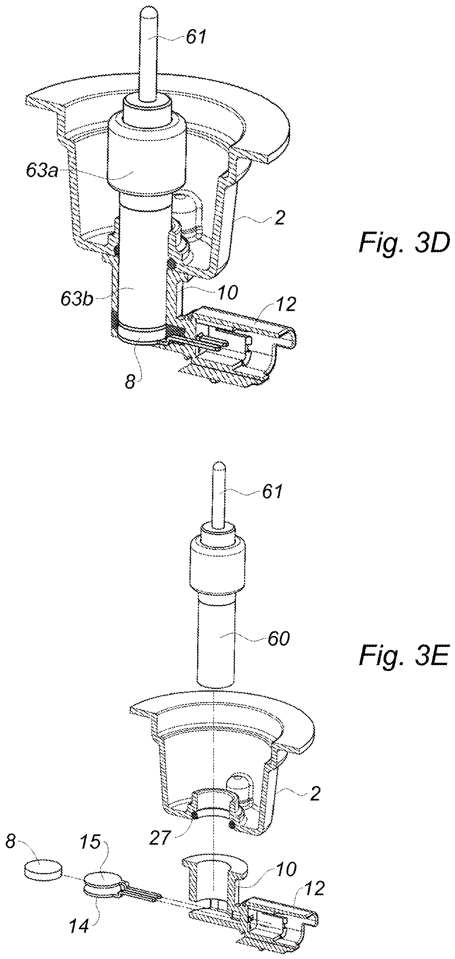

Les deux électrodes 14, 15, par exemple en laiton, sont raccordées aux fils de pilotage. Alternativement, comme illustré sur les figures 3A, 3D et 3E, les deux électrodes 14, 15 peuvent être placées, par exemple soudées, de part et d'autre de la pastille PTC. Cet empilage des deux électrodes 14, 15 sur la pastille PTC permet l'utilisation d'une pâte thermiquement conductrice mais électriquement isolante entre la capsule 60 et l'élément 8 chauffant.

On remarquera sur les figures 2A-2C et 3A-3C que la vanne 1 thermostatique comprend avantageusement des moyens de rappel configurés pour maintenir l'élément 8 chauffant au contact de la capsule 60. Ces moyens de rappel, par exemple un ressort 16 permettent de maintenir en pression l'empilage capsule 60 et élément 8 chauffant lorsque le clapet 4 principal est fermé, afin de garantir une bonne continuité thermique et électrique. Le ressort 16 prend ici appui sur une face amont du clapet 4 principal d'une part, et sur l'extrémité 60a immergée de la caspule 60 d'autre part. Il s'étend autour de la tige 61 d'actionnement.

Par ailleurs, la vanne 1 thermostatique peut comprendre un clapet 9 secondaire configuré pour obturer ou ouvrir la deuxième sortie 22 de fluide quand le clapet 4 principal est respectivement ouvert ou fermé. Ce clapet 9 secondaire peut être formé par un coulisseau, par exemple cylindrique, muni d'une fenêtre de passage de fluide et relié au clapet 4 principal de sorte que l'ouverture, respectivement la fermeture, de ce dernier provoque la fermeture, respectivement l'ouverture, concomitante du clapet 9 secondaire, c'est-à-dire le positionnement de la fenêtre de passage de fluide du coulisseau formant le clapet 9 secondaire en décalage, respectivement en regard, d'une ouverture de la deuxième sortie 22. Ainsi, les deux clapets 4, 9 sont solidaires en translation. Le clapet 9 secondaire s'étend parallèlement à l'actionneur 6 thermostatique, le coulisseau tubulaire formant le clapet 9 secondaire s'étendant notamment autour de l'actionneur 6 thermostatique.

Le fonctionnement de la vanne 1 thermostatique est décrit ci-après.

En mode de fonctionnement non piloté, la capsule 60 à cire, via sa portion interne 63a immergée, suit l'évolution de la température du fluide qui circule dans le boitier 2. L'élévation de la température du fluide jusqu'à un seuil prédéterminé provoque un changement d'état de la cire qui passe d'un état solide à un état liquide. Ce changement d'état s'accompagne d'une augmentation importante du volume de la cire qui repousse la tige 61 d'actionnement et, ce faisant, ouvre le clapet 4 principal. L'ouverture du clapet 4 principal s'accompagne par une fermeture progressive du clapet 9 secondaire de by-pass afin de concentrer la circulation vers le radiateur. Quand ultérieurement la température du fluide en refroidissant atteint un seuil de température prédéterminé (correspondant au seuil de température d'ouverture décalé d'une hystérésis), la cire change de nouveau d'état, passant de l'état liquide à l'état solide, avec une réduction importante de volume. Sous la poussée du ressort 40, le clapet 4 principal se ferme, et le clapet 9 secondaire s'ouvre pour autoriser le retour du fluide vers une pompe de circulation.

En mode de fonctionnement piloté, l'élément 8 chauffant est alimenté et réchauffe la portion externe 63b émergeante de la capsule 60. Dans un premier temps, seul le volume de cire à proximité de l'élément 8 chauffant est concerné ; toutefois, la cire solide étant un mauvais conducteur thermique, ce petit volume change rapidement d'état en provoquant un début d'ouverture du clapet 4 principal. Selon la température du fluide en circulation dans le boitier 2 et la puissance électrique de l'élément 8 chauffant, la température interne de la capsule 60 va s'équilibrer avec tout ou partie de la cire solide ou liquide, régulant ainsi la course d'ouverture du clapet 4 principal, en permettant d'anticiper l'ouverture du clapet 4 principal c'est-à-dire abaisser la température d'ouverture, en condition de forte sollicitation moteur.

Lors de l'arrêt du pilotage électrique, la chaleur dégagée par l'élément 8 chauffant diffuse vers la partie immergée 63a de la capsule à cire 60, et vers le liquide en circulation dans le boîtier, assurant ainsi un refroidissement de la cire et une réduction de volume lié au changement d'état de liquide à solide, autorisant ainsi la fermeture du clapet 4 grâce à la poussée du ressort de fermeture 40.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers dispositifs ou par la substitution d'équivalents techniques, sans sortir pour autant du domaine de protection de l'invention.

Ainsi, le boîtier 2 pourrait comporter plusieurs entrées 20 et/ou sorties 22 de fluide.

## Revendications

1. Vanne (1) thermostatique comprenant un boîtier (2), le boîtier (2) comprenant au moins une entrée (20) de fluide, au moins une première sortie (21) de fluide et au moins une deuxième sortie (22) de fluide, un clapet (4) principal mobile par rapport au boîtier (2) entre une position fermée dans laquelle le clapet (4) principal ferme la première sortie (21) de fluide et une position ouverte dans laquelle le clapet (4) principal ouvre la première sortie (21) de fluide, un actionneur (6) thermostatique, l'actionneur (6) thermostatique comprenant une tige (61) d'actionnement connectée au clapet (4) principal et une capsule (60) contenant une matière thermodilatable, et un élément (8) chauffant destiné à chauffer la matière thermodilatable, en outre la capsule (60) de l'actionneur (6) thermostatique est montée fixe par rapport au boitier (2), traverse le boitier (2) et présente une portion interne (63a) qui s'étend à l'intérieur du boîtier (2) celui-ci présentant une ouverture (26) de montage en travers de laquelle s'étend la capsule (60), de manière à baigner dans le fluide circulant entre l'entrée (20) et la deuxième sortie du boîtier (2), la portion interne (63a) s'étendant sur au moins un tiers de la longueur totale de la capsule (60), et la capsule (60) présente une portion externe (63b) qui s'étend en-dehors du boîtier (2),
**caractérisée en ce que** l'élément (8) chauffant est agencé hors du boîtier (2) et hors de la capsule (60) pour chauffer la portion externe (63b) de cette capsule (60).

2. Vanne (1) selon la revendication précédente, dans laquelle l'élément (8) chauffant est un élément à coefficient de température positif PTC.

3. Vanne (1) selon l'une des revendications précédentes, dans laquelle la vanne (1) thermostatique comprend un capuchon (10) de protection, thermiquement et électriquement isolant, logeant l'élément (8) chauffant et la portion externe (63b) de la capsule (60).

4. Vanne (1) selon l'une des revendications précédentes, dans laquelle la vanne (1) thermostatique comprend des moyens de rappel configurés pour maintenir l'élément (8) chauffant au contact de la capsule (60).

5. Vanne (1) selon l'une des revendications précédentes, dans laquelle la matière thermodilatable est une cire incluant une charge thermiquement conductrice.

6. Vanne (1) selon l'une des revendications précédentes, dans laquelle la capsule (60) est montée fixe par rapport au boîtier (2).

7. Vanne (1) selon l'une des revendications précédentes, dans laquelle la tige (61) d'actionnement est configurée pour s'étendre jusque dans la portion externe (63b) de la capsule (60).

8. Vanne (1) selon l'une des revendications précédentes, dans laquelle la vanne (1) thermostatique comprend des moyens de rappel du clapet (4) principal en position fermée, montés en opposition à l'actionneur (6) thermostatique.

9. Vanne (1) selon l'une des revendications précédentes, dans laquelle la vanne (1) thermostatique comprend un clapet (9) secondaire configuré pour obturer ou ouvrir la deuxième sortie (22) de fluide quand le clapet (4) principal est respectivement ouvert ou fermé.

10. Véhicule automobile comprenant une vanne (1) thermostatique selon l'une des revendications précédentes.

## Patentansprüche

1. Thermostatisches Ventil (1), umfassend ein Gehäuse (2), wobei das Gehäuse (2) mindestens einen Fluideinlass (20), mindestens einen ersten Fluidauslass (21) und mindestens einen zweiten Fluidauslass (22) umfasst, eine Hauptklappe (4), die im Verhältnis zum Gehäuse (2) zwischen einer geschlossenen Position, in der die Hauptklappe (4) den ersten Fluidauslass (21) verschließt, und einer offenen Position, in der die Hauptklappe (4) den ersten Fluidauslass (21) öffnet, bewegbar ist, ein thermostatisches Betätigungselement (6), wobei das thermostatische Betätigungselement (6) eine mit der Hauptklappe (4) verbundene Betätigungsstange (61) und eine Kapsel (60) umfasst, die ein wärmeausdehnbares Material enthält, und ein Heizelement (8), das dazu bestimmt ist, das wärmeausdehnbare Material zu erwärmen, wobei ferner die Kapsel (60) des thermostatischen Betätigungselements (6) im Verhältnis zum Gehäuse (2) fest montiert ist, das Gehäuse (2) durchdringt und einen inneren Abschnitt (63a) aufweist, der sich im Inneren des Gehäuses (2) erstreckt, welches eine Montageöffnung (26) aufweist, über die sich die Kapsel (60) erstreckt, um in dem Fluid zu schwimmen, die zwischen dem Einlass (20) und dem zweiten Auslass des Gehäuses (2) zirkuliert, wobei der innere Abschnitt (63a) sich über mindestens ein Drittel der gesamten Länge der Kapsel (60) erstreckt und die Kapsel (60) einen äußeren Abschnitt (63b) aufweist, der sich außerhalb des Gehäuses (2) erstreckt,
**dadurch gekennzeichnet, dass** das Heizelement (8) außerhalb des Gehäuses (2) und außerhalb der Kapsel (60) angeordnet ist, um den äußeren Abschnitt (63b) dieser Kapsel (60) zu erwärmen.

2. Ventil (1) nach dem vorhergehenden Anspruch, wobei das Heizelement (8) ein PTC-Element mit einem positiven Temperaturkoeffizienten ist.

3. Ventil (1) nach einem der vorhergehenden Ansprüche, wobei das thermostatische Ventil (1) eine thermisch und elektrisch isolierende Schutzkappe (10) umfasst, in der das Heizelement (8) und der äußere Abschnitt (63b) der Kapsel (60) untergebracht sind.

4. Ventil (1) nach einem der vorhergehenden Ansprüche, wobei das thermostatische Ventil (1) ein Rückführmittel umfasst, das so konfiguriert ist, dass es das Heizelement (8) in Kontakt mit der Kapsel (60) hält.

5. Ventil (1) nach einem der vorhergehenden Ansprüche, wobei das wärmeausdehnbare Material ein Wachs ist, das einen wärmeleitenden Füllstoff enthält.

6. Ventil (1) nach einem der vorhergehenden Ansprüche, wobei die Kapsel (60) im Verhältnis zum Gehäuse (2) fest montiert ist.

7. Ventil (1) nach einem der vorhergehenden Ansprüche, wobei die Betätigungsstange (61) so konfiguriert ist, dass sie sich bis in den äußeren Abschnitt (63b) der Kapsel (60) erstreckt.

8. Ventil (1) nach einem der vorhergehenden Ansprüche, wobei das thermostatische Ventil (1) ein Rückstellmittel der Hauptklappe (4) in der geschlossenen Position umfasst, die gegenüber dem thermostatischen Betätigungselement (6) montiert ist.

9. Ventil (1) nach einem der vorhergehenden Ansprüche, wobei das thermostatische Ventil (1) eine Sekundärklappe (9) umfasst, die so konfiguriert ist, dass sie den zweiten Fluidauslass (22) schließt oder öffnet, wenn die Hauptklappe (4) jeweils geöffnet oder geschlossen ist.

10. Kraftfahrzeug, umfassend ein thermostatisches Ventil (1) nach einem der vorhergehenden Ansprüche.

## Claims

1. A thermostatic valve (1) comprising a case (2), the case (2) comprising at least one fluid inlet (21), at least one first fluid outlet (21) and at least one second fluid outlet (22), a main flap (4) movable relative to the case (2) between a closed position in which the main flap (4) closes the first fluid outlet (21) and an open position in which the main flap (4) opens the first fluid outlet (21), a thermostatic actuator (6), the thermostatic actuator (6) comprising an actuating rod (61) connected to the main flap (4) and a capsule (60) containing a heat-expandable material, and a heating element (8) intended to heat the heat-expandable material, the capsule (60) of the thermostatic actuator (6) is further fixedly mounted relative to the case (2), passes through the case (2) and has an inner portion (63a) which extends inside the case (2), the latter having a mounting opening (26) across which the capsule (60) extends, so as to bathe in the fluid circulating between the inlet (20) and the second outlet of the case (2), the inner portion (63a) extending over at least one third of the total length of the capsule (60), and the capsule (60) has an outer portion (63b) which extends outside the case (2), **characterized in that** the heating element (8) arranged outside the case (2) and outside the capsule (60) to heat the outer portion (63b) of this capsule (60).

2. The valve (1) according to the preceding claim, wherein the heating element (8) is a Positive Temperature Coefficient PTC element.

3. The valve (1) according to one of the preceding claims, wherein the thermostatic valve (1) comprises a thermally and electrically insulating protective cap (10), accommodating the heating element (8) and the outer portion (63b) of the capsule (60).

4. The valve (1) according to one of the preceding claims, wherein the thermostatic valve (1) comprises return means configured to hold the heating element (8) in contact with the capsule (60).

5. The valve (1) according to one of the preceding claims, wherein the heat-expandable material is a wax including a thermally-conductive charge.

6. The valve (1) according to one of the preceding claims, wherein the capsule (60) is fixedly mounted relative to the case (2).

7. The valve (1) according to one of the preceding claims, wherein the actuating rod (61) is configured to extend up to the outer portion (63b) of the capsule (60).

8. The valve (1) according to one of the preceding claims, wherein the thermostatic valve (1) comprises means for biasing the main flap (4) in the closed position, mounted in opposition to the thermostatic actuator (6).

9. The valve (1) according to one of the preceding claims, wherein the thermostatic valve (1) comprises a secondary flap (9) configured to close off or open the second fluid outlet (22) when the main flap (4) is respectively open or closed.

10. A motor vehicle comprising a thermostatic valve (1) according to one of the preceding claims.
